# EUROPÄISCHE PATENTSCHRIFT

(11) **EP 2 423 577 B1**
(45) Veröffentlichungstag und Bekanntmachung des Hinweises auf die Patenterteilung: **21.04.2021**
(21) Anmeldenummer: 09015756.1
(22) Anmeldetag: 19.12.2009
(51) Int. Cl.: F22B 1/18, F22D 1/36, F23N 5/00, F22D 1/50

(54) **Verfahren zur Rückgewinnung von Energie aus dem Abgas eines Brenners**
Method for regaining energy from the exhaust gas of a burner
Procédé de récupération d'énergie à partir du gaz d'échappement d'un brûleur

(30) Priorität: 07.01.2009 DE 102009004271
(43) Veröffentlichungstag der Anmeldung: 29.02.2012
(73) Patentinhaber: Herbert Kannegiesser GmbH, 32602 Vlotho (DE)
(72) Erfinder: Bringewatt, wilhelm, 32457 Porta Westfalica (DE); Heinz, Engelbert, 32602 Vlotho (DE)
(74) Vertreter: Möller, Friedrich

(56) Entgegenhaltungen:
- EP-A1- 0 220 510
- EP-A1- 1 275 821
- DE-A1- 19 855 670
- DE-C1- 4 342 156
- FR-A- 1 109 239

## Beschreibung

Die Erfindung betrifft ein Verfahren zur Rückgewinnung von Energie aus dem Abgas eines Brenners gemäß dem Oberbegriff des Anspruchs 1.

Brenner zum Aufheizen von Flüssigkeiten, insbesondere zum Beheizen eines Dampfkessels zur Erzeugung von Dampf, welcher beispielsweise in Wäschereien benötigt wird, erzeugen Abgas mit einer verhältnismäßig hohen Temperatur von über 200°C. Es ist bereits bekannt, dem heißen Abgas einen Teil der Energie zu entziehen und die so gewonnene Energie zur Vorwärmung der vom Brenner benötigten Verbrennungsluft zu verwenden. Das Abgas verfügt dann aber immer noch über eine relativ hohe Temperatur, wodurch ein erheblicher Teil der im Abgas enthaltenen restlichen Wärmeenergie ungenutzt verloren geht Dokument EP 0220510 A1 beschreibt ein Verfahren, bei dem Verbrennungsluft durch einen Luftvorwärmer vor der Feuerung vorgewärmt wird und zwar durch die Restwärme des während der Feuerung erzeugten Rauchgases.

Der Erfindung liegt nun die Aufgabe zugrunde, ein Verfahren zur Rückgewinnung von Energie aus dem Abgas eines Brenners zu schaffen, womit mehr Energie aus dem Abgas zurückgewonnen werden kann als bisher.

Ein Verfahren zur Lösung dieser Aufgabe weist die Maßnahmen des Anspruchs 1 auf. Dadurch, dass dem Abgas zusätzliche Energie zum Vorwärmen mindestens einer Flüssigkeit entzogen wird, kann ein Großteil der im Abgas vorhandenen Energie zurückgewonnen werden. Das zusätzliche Aufwärmen mindestens einer Flüssigkeit ist auch wirtschaftlich möglich, wenn die Temperatur des Abgases schon reduziert worden ist.

Bei dem Verfahren ist es vorgesehen, vom Abgas zunächst die Verbrennungsluft für den Brenner und anschließend die mindestens eine Flüssigkeit vorzuwärmen. Nach dem Vorwärmen der Verbrennungsluft verbleibt im Abgas noch so viel Restenergie, und zwar Restwärme, die ausreicht, um mindestens eine Flüssigkeit vorzuwärmen, weil Flüssigkeiten nicht auf eine so hohe Temperatur erwärmt zu werden braucht, wie die Verbrennungsluft für den Brenner.

Es ist vorgesehen, die Temperatur des heißen Abgases des Brenners beim Erwärmen der Verbrennungsluft auf 90°C bis 140°C, vorzugsweise 95°C bis 110°C, zu reduzieren und die Temperatur dieses Abgas beim Vorwärmen der mindestens einen Flüssigkeit noch weiter zu reduzieren auf 40°C bis 60°C, vorzugsweise 45°C bis 50°C. Auf diese Weise kann die Restenergie bzw. Restwärme des heißen Abgases des Brenners, die nach dem Vorwärmen der Verbrennungsluft des Brenners übrig bleibt, noch weiter reduziert werden, um mindestens eine Flüssigkeit aufzuwärmen, und zwar bis nahe an die Umgebungstemperatur.

Beim Entziehen von Energie aus dem heißen Abgas des Brenners für die Verbrennungsluft kann diese auf 160°C bis 200°C, vorzugsweise 170°C bis 190°C, aufgewärmt werden. Diese Temperatur der Verbrennungsluft führt zu einer deutlichen Verbesserung des Wirkungsgrads des Brenners.

Die mindestens eine Flüssigkeit wird durch die Restenergie des beim Vorwärmen der Verbrennungsluft schon zum Teil abgekühlten Abgases aufgewärmt auf 60°C bis 90°C, vorzugsweise 65°C bis 75°C. Diese Temperatur liegt deutlich über der Temperatur kalten Frischwassers. Die mindestens eine Flüssigkeit kann bis nahe an den Siedepunkt von der Restenergie des Abgases vom Brenner vorgewärmt werden, so dass diesem verhältnismäßig wenig Energie zugeführt werden muss, um es zum Sieden zu bringen.

Nach einer bevorzugten Ausgestaltung des Verfahrens ist vorgesehen, zur Vorwärmung der mindestens einen Flüssigkeit einen Luft-/Flüssigkeits-Wärmetauscher einzusetzen, und zwar insbesondere einen Kondensations-Wärmetauscher. Mit diesem Wärmetauscher kann wirksam aus dem bereits zuvor zur Vorwärmung der Verbrennungsluft zum Teil abgekühlten Abgas noch ein Großteil der restlichen Energie entzogen werden zum Vorwärmen der mindestens einen Flüssigkeit auf eine relativ hohe Temperatur. Bevorzugt wird von der restlichen Energie des heißen Abgases des Brenners Speisewasser eines Dampferzeugers vorgewärmt, insbesondere Kesselspeisewasser. Dadurch kann mit dem erfindungsgemäßen Verfahren ein Großteil der zur Dampferzeugung benötigten Energie eingespart werden. Der Wirkungsgrad des Brenners kann dabei bezogen auf den unteren Heizwert des zur Speisung des Brenners dienenden Gases oder eines anderen fossilen Brennstoffs über 100% liegen, und zwar bis zu 105% erreichen.

Weiterhin ist vorgesehen, das von mindestens einem Wärmetauscher aufgewärmte Speisewasser einem Entgaser zur Speisewassererzeugung, vorzugsweise einem thermischen Entgaser, zuzuführen. Das vorgewärmte Speisewasser kann so zusammen mit dem sich bereits im Entgaser befindlichen Speisewasser mit geringem Energieaufwand wirksam entgast werden.

Nach einer weiteren Ausgestaltung des erfindungsgemäßen Verfahrens ist es vorgesehen, den Brenner mit einer Restsauerstoffregelung zu betreiben. Hierdurch kann die Verbrennung des Brenners an die jeweils vorherrschenden Bedingungen angepasst und dadurch optimiert werden. Die Restsauerstoffregelung kann Einfluss nehmen auf die Zufuhr von Erdgas oder einem anderen fossilen Brennstoff zum Brenner; aber auch auf die Zufuhr aufgewärmter Verbrennungsluft zum Brenner. Insbesondere dient die Restsauerstoffregelung dazu, den Brenner mit einem nur geringen Sauerstoffüberschuss optimiert zu betreiben.

Das erfindungsgemäße Verfahren dient bevorzugt zur Erzeugung von Dampf zum Betrieb von Wäschereimaschinen, insbesondere mindestens einer Mangel. Der in Wäschereien benötigte Dampf lässt sich besonders vorteilhaft unter Verwendung der Restenergie des heißen Abgases des Brenners erzeugen, wobei im erfindungsgemäßen Verfahren ein Großteil der Energie im heißen Abgas des Brenners zurückgewonnen werden kann und dabei die Dampferzeugung mit einem Wirkungsgrad von über 100% bezogen auf den unteren Heizwert des Brennstoffs des Brenners erfolgen kann.

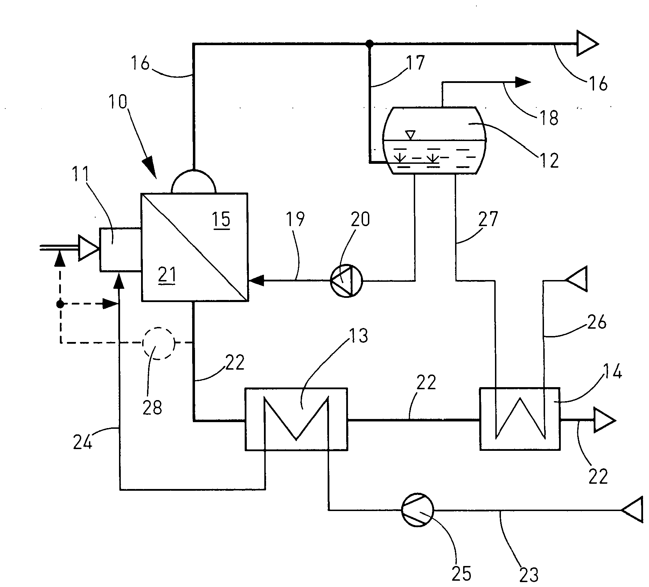

Nachfolgend wird ein bevorzugtes Ausführungsbeispiel der Erfindung anhand der einzigen Figur der Zeichnung näher erläutert.

In der Zeichnung ist schematisch in Form eines Blockschaltbilds die Dampferzeugung, und zwar insbesondere die Erzeugung von in Wäschereien zum Betrieb beispielsweise mindestens eine Mangel benötigten Dampf, gezeigt.

In der Zeichnung ist symbolisch ein Dampfkessel 10 dargestellt, der von einem Brenner 11 befeuert wird. Im vorliegenden Falle wird davon ausgegangen, dass der Brenner 11 mit Gas, insbesondere Erdgas, gespeist wird. Der Brenner 11 kann aber auch ölbeheizt sein. Dem Dampfkessel 10 ist ein Entgaser 12 zugeordnet.

Auf der Abgasseite 21 des Dampfkessels 10 sind ein Luftvorwärmer 13 und in Strömungsrichtung des Abgases dahinter ein Speisewasservorwärmer 14 vorgesehen. Beim Luftvorwärmer 13 handelt es sich bevorzugt um einen Luft-/Luft-Wärmetauscher. Beim Speisewasservorwärmer 14 kann es sich um einen Luft-/Flüssigkeits-Wärmetauscher handeln, und zwar insbesondere einen Kondensat-Wärmetauscher. Dieser kann aus mehreren hohlen Wärmetauscherplatten bestehen, an denen außen das Abgas entlangströmt und die im Inneren Strömungskanäle für das zu erwärmende Speisewasser aufweisen.

Von einer Dampfseite 15 des Dampfkessels 10 führt eine Dampfleitung 16 zur mit Dampf zu versorgenden Wäschereimaschine, beispielsweise mindestens einer Mangel. Die Wäschereimaschine, insbesondere Mangel, ist in der Zeichnung nicht dargestellt.

Von der Dampfleitung 16 zweigt eine Dampfzuleitung 17 zum Entgaser 12 ab. Oben aus dem Entgaser 12 ist eine Entlüftungsleitung 18 herausgeführt. Des Weiteren führt vom Entgaser 12 eine Rücklaufleitung 19 zur Dampfseite 15 des Dampfkessels 10. Zur Aufrechterhaltung der Strömung in der Rücklaufleitung 19 befindet sich in dieser eine Flüssigkeitsumwälzeinrichtung, beispielsweise eine Pumpe 20.

Von einer Abgasseite 21 des Dampfkessels 10 führt eine Abgasleitung 22 zum bzw. durch den Luftvorwärmer 13. Vom Luftvorwärmer 13 führt die Abgasleitung 22 weiter zum hinter dem Luftvorwärmer 13 angeordneten Speisewasservorwärmer 14. Im Anschluss an den Speisewasservorwärmer 14 wird die Abgasleitung 22 direkt ins Freie oder zu einem Kamin geleitet.

Zum Luftvorwärmer 13 führt eine Frischluftzuleitung 23. Vom Luftvorwärmer 13 vorgewärmte Luft verlässt den Luftvorwärmer 13 über eine Luftzuleitung 24, die die als Verbrennungsluft für den Brenner 11 dienende vorgewärmte Luft zum Brenner 11 führt. Im gezeigten Ausführungsbeispiel befindet sich in der Frischluftzuleitung 23 eine Einrichtung zur Erzeugung einer Luftströmung, wobei es sich um ein Gebläse oder - gemäß dem gezeigten Ausführungsbeispiel - einen Ventilator 25 handeln kann. Auf diese Weise wird die Frischluft von der Frischluftzuleitung 23 durch den Luftvorwärmer 13 und die Luftzuleitung 24 zum Brenner 11 transportiert.

Über eine Frischwasserzuleitung 26 wird kaltes Frischwasser zum Speisevorwärmer 14 geleitet. Das vom nach dem Wärmetauscherprinzip im Speisewasservorwärmer 14 vorgewärmte Speisewasser wird über eine Speisewasserzuleitung 27 dem Entgaser 12 zugeführt. Denkbar ist es aber auch, das vorgewärmte Speisewasser über die Speisewasserzuleitung 27 direkt zur Dampfseite 15 des Dampfkessels 10 zu leiten.

Zwischen der Abgasleitung 22 und der Gaszufuhr zum Brenner 11 ist eine Restsauerstoffregelung 28 vorgesehen. Es handelt sich hierbei bevorzugt um eine O₂-Regelung. Im gezeigten Ausführungsbeispiel nimmt die Restsauerstoffregelung 28 auch Einfluss auf die Zufuhr vorgewärmte Frischluft, nämlich Verbrennungsluft, zum Brenner 11, indem sie mit der Luftzuleitung 24 verknüpft ist.

Das erfindungsgemäße Verfahren wird nachfolgend unter Bezugnahme auf die in der Zeichnung dargestellte und zuvor beschriebene Dampferzeugungsanlage erläutert:
Im vom Brenner 11 befeuerten Dampfkessel 10 wird Dampf erzeugt zur Versorgung mindestens einer Wäschereimaschine, wie zum Beispiel einer Mangel. Der Dampf entsteht auf der Dampfseite 15 des Dampfkessels 10. Dabei fällt an der Abgasseite 21 des Dampfkessels 10 heißes Abgas vom Brenner 10 an.

Nach dem erfindungsgemäßen Verfahren wird dem Abgas des Brenners 11 mehrstufig, und zwar im gezeigten Ausführungsbeispiel in zwei aufeinanderfolgende Stufen, ein Großteil der darin enthaltenen Energie, nämlich Restwärme, entzogen. Das Abgas verlässt die Abgasseite 21 des Brenners 11 mit einer Temperatur zwischen etwa 220°C und 240°C. Über die Abgasleitung 22 wird das auch die ursprüngliche Abgastemperatur aufweisende Abgas zum Luftvorwärmer 13 geleitet. In diesem wird nach dem Wärmetauscherprinzip beim Hindurchleiten des heißen Abgases vom Brenner 11 benötigte Frischluft, und zwar Verbrennungsluft, vorgewärmt. Man spricht in diesem Zusammenhang von einer sogenannten Brennerluftvorwärmung. Die Außentemperatur aufweisende Frischluft wird vom Ventilator 25 durch die Frischluftzuleitung 23, den Luftvorwärmer 13 und die Luftzuleitung 24 zum Brenner 11 transportiert. Dabei strömt die noch kalte Frischluft im Luftvorwärmer 13 im Gegenstrom am heißen Abgas vom Brenner 11 entlang. Infolge dessen wird die ursprünglich eine Außentemperatur aufweisende, kalte Frischluft vom Luftvorwärmer 13 auf etwa 170°C bis 190°C, vorzugsweise etwa 180°C, erwärmt. Die so erwärmte Frischluft wird dann als Verbrennungsluft dem Brenner 11 zugeführt.

Den Luftvorwärmer 13 verlässt teilweise abgekühltes Abgas mit einer Resttemperatur von etwa 95°C bis 110°C, vorzugsweise etwa 105°C. Dieses nur teilweise abgekühlte Abgas wird über die Abgasleitung 22 zum auf den Luftvorwärmer 13 in Strömungsrichtung folgenden Speisewasservorwärmer 14 geführt. Hierbei handelt es sich um einen Luft-/ Flüssigkeits-Wärmetauscher, vorzugsweise einen Kondensat-Wärmetauscher, der dem Abgas einen Großteil der darin noch enthaltenen Restenergie entzieht und dadurch als Speisewasser für den Dampkessel 10 dienendes Frischwasser erhitzt. Dabei wird das ursprünglich Raumtemperatur aufweisende Frischwasser auf eine Temperatur im Bereich von 65°C bis 75°C, vorzugsweise etwa 70°C, erwärmt. Das den Speisewasservorwärmer 14 verlassende abgekühlte Abgas weist dann nur noch eine Temperatur auf, die geringfügig über der Raumtemperatur liegt, nämlich im Bereich von 45°C bis 50°C.

Beim hier gezeigten Verfahren wird das vom Speisewasservorwärmer 14 vorgewärmte Speisewasser dem Entgaser 12 zugeführt. Im Entgaser 12 befindet sich ein Vorrat an vorgewärmtem Speisewasser, das zum Entgasen durch den Entgaser 12 vom über die Dampfzufuhrleitung 17 zugeführten Dampf noch weiter erhitzt wird, und zwar um eine Temperatur um oder geringfügig über dem Siedepunkt. Vom Entgaser 12 wird das soweit erwärmte Speisewasser von der Pumpe 20 über die Rücklaufleitung 19 der Dampfseite 15 des Dampfkessels 10 zugeführt und hier in Dampf umgewandelt. Der im Dampfkessel 10 erzeugte Dampf wird dann über die Dampfleitung 16 seiner Verwendung zugeführt. Dabei wird ein Teil des Dampfes über die Dampfzuleitung 17 abgezweigt zum Entgaser 12.

Es ist vorgesehen, den Brenner 11 mit einer Restsauerstoffregelung (O₂-Regelung) zu betreiben. Diese stellt sicher, dass die Verbrennung des zur Speisung des Brenners 11 dienenden Erdgases oder eines anderen fossilen Brennstoffs mit nur einem geringen Sauerstoffüberschuss, also mit wenig Restsauerstoff, erfolgt, und zwar unter allen momentan vorherrschenden Umgebungsbedingungen. Die Restsauerstoffregelung 28 nimmt Einfluss auf die Zufuhr von vorgewärmter Verbrennungsluft zum Brenner 11 und auf die Zufuhr von Erdgas zum Brenner 11.

Eine Regelung des Luftvorwärmers 13 ist nicht erforderlich, weil der Verbrennungsluft-Volumenstrom stets in einem bestimmten Verhältnis zum Abgas-Volumenstrom steht. Dadurch wird der Luftvorwärmer 13 stets optimal genutzt. Insbesondere in Verbindung mit der Restsauerstoffregelung 28 am Brenner 11 kommt es so zu einer optimalen Ausnutzung der dem Brenner 11 zugeführten Energie. Dabei beträgt der Gesamtwirkungsgrad über 100% bezogen auf den unteren Heizwert des Erdgases zum Betrieb des Brenners 11.

### Bezugszeichenliste:

- 10: Dampfkessel
- 11: Brenner
- 12: Entgaser
- 13: Luftvorwärmer
- 14: Speisewasservorwärmer
- 15: Dampfseite
- 16: Dampfleitung
- 17: Dampfzuleitung
- 18: Entlüftungsleitung
- 19: Rücklaufleitung
- 20: Pumpe
- 21: Abgasseite
- 22: Abgasleitung
- 23: Frischluftzuleitung
- 24: Luftzuleitung
- 25: Ventilator
- 26: Frischwasserzuleitung
- 27: Speisewasserzuleitung
- 28: Restsauerstoffregelung

## Patentansprüche

1. Verfahren zur Rückgewinnung von Energie aus dem Abgas eines Brenners (11) zum Befeuern eines Dampfkessels (10) einer Wäschereimaschine, wobei vom Abgas des Brenners (11) die von demselben benötigte Verbrennungsluft vorgewärmt wird, wobei dem Abgas des Brenners (11) nach dem Verlassen einer Abgasseite (21) des Dampfkessels (10) zusätzlich Energie zum Vorwärmen mindestens einer Flüssigkeit entzogen wird und wobei vom Abgas des Brenners (11) zunächst die Verbrennungsluft des Brenners (11) und anschließend die mindestens eine Flüssigkeit vorgewärmt wird, **dadurch gekennzeichnet, dass** die Temperatur des heißen Abgases des Brenners (11) beim Erwärmen der Verbrennungsluft des Brenners (11) auf 90°C bis 140°C reduziert und beim Vorwärmen der mindestens einen Flüssigkeit die Temperatur des Abgases des Brenners (11) noch weiter verringert wird auf 40°C bis 60°C.

2. Verfahren nach Anspruch 1, **dadurch gekennzeichnet, dass** die Temperatur des heißen Abgases des Brenners (11) beim Erwärmen der Verbrennungsluft des Brenners (11) auf 95°C bis 110°C reduziert und beim Vorwärmen der mindestens einen Flüssigkeit die Temperatur des Abgases des Brenners (11) noch weiter verringert wird auf 40°C bis 60°C, vorzugsweise 45°C bis 50°C.

3. Verfahren nach Anspruch 1 oder 2, **dadurch gekennzeichnet, dass** die Verbrennungsluft des Brenners (11) auf 160°C bis 200°C, vorzugsweise auf 170°C bis 190°C, aufgewärmt wird.

4. Verfahren nach einem der vorhergehenden Ansprüche, **dadurch gekennzeichnet, dass** die mindestens eine Flüssigkeit von der Restenergie im Abgas des Brenners (11) auf 60°C bis 90°C, vorzugsweise 65°C bis 75°C, aufgewärmt wird.

5. Verfahren nach einem der vorhergehenden Ansprüche, **dadurch gekennzeichnet, dass** zur Vorwärmung der mindestens einen Flüssigkeit ein Luft-/Flüssigkeits-Wärmetauscher eingesetzt wird, insbesondere ein Kondensations-Wärmetauscher.

6. Verfahren nach einem der vorhergehenden Ansprüche, **dadurch gekennzeichnet, dass** vom Abgas des Brenners (11) Speisewasser eines Dampferzeugers, vorzugsweise eines Dampfkessels (10), vorgewärmt wird.

7. Verfahren nach Anspruch 6, **dadurch gekennzeichnet, dass** das aufgewärmte Speisewasser einem Entgaser (12), vorzugsweise einem thermischen Entgaser (12), zugeführt wird.

8. Verfahren nach einem der vorhergehenden Ansprüche, **dadurch gekennzeichnet, dass** der Brenner (11) mit einer Restsauerstoffregelung (28) betrieben wird.

9. Verfahren nach einem der Ansprüche 6, 7 oder 8, falls letzterer von Anspruch 6 oder 7 abhängig ist, **dadurch gekennzeichnet, dass** vom Dampferzeuger, insbesondere Dampfkessel (10), Dampf zum Betrieb mindestens einer Wäschereimaschine, insbesondere einer Mangel, erzeugt wird.

## Claims

1. Method for recovering energy from the exhaust gas of a burner (11) for the heating of a steam boiler (10) of a laundry machine, wherein the combustion air required by the burner (11) is pre-warmed by the exhaust gas of said burner, wherein energy for pre-warming at least one liquid is additionally extracted from the exhaust gas of the burner (11) after it exits an exhaust-gas side (21) of the steam boiler (10), and wherein firstly the combustion air of the burner (11) and subsequently the at least one liquid is pre-warmed by the exhaust gas of the burner (11), **characterized in that** the temperature of the hot exhaust gas of the burner (11) is reduced to 90°C to 140°C during the warming of the combustion air of the burner (11), and the temperature of the exhaust gas of the burner (11) is reduced yet further to 40°C to 60°C during the pre-warming of the at least one liquid.

2. Method according to Claim 1, **characterized in that** the temperature of the hot exhaust gas of the burner (11) is reduced to 95°C to 110°C during the warming of the combustion air of the burner (11), and the temperature of the exhaust gas of the burner (11) is reduced yet further to 40°C to 60°C, preferably 45°C to 50°C, during the pre-warming of the at least one liquid.

3. Method according to Claim 1 or 2, **characterized in that** the combustion air of the burner (11) is warmed to 160°C to 200°C, preferably to 170°C to 190°C.

4. Method according to any of the preceding claims, **characterized in that** the at least one liquid is warmed by the residual energy in the exhaust gas of the burner (11) to 60°C to 90°C, preferably 65°C to 75°C.

5. Method according to any of the preceding claims, **characterized in that** an air/liquid heat exchanger, in particular a condensation heat exchanger, is used for the pre-warming of the at least one liquid.

6. Method according to any of the preceding claims, **characterized in that** feed water of a steam generator, preferably of a steam boiler (10), is pre-warmed by the exhaust gas of the burner (11).

7. Method according to Claim 6, **characterized in that** the warmed feed water is fed to a degasser (12), preferably a thermal degasser (12).

8. Method according to any of the preceding claims, **characterized in that** the burner (11) is operated with residual oxygen control (28).

9. Method according to any of Claims 6, 7 or 8, if the latter is dependent on Claim 6 or 7, **characterized in that** steam for the operation of at least one laundry machine, in particular of a mangle, is generated by the steam generator, in particular steam boiler (10).

## Revendications

1. Procédé de récupération d'énergie à partir du gaz d'échappement d'un brûleur (11) pour l'alimentation d'une chaudière à vapeur (10) d'une machine de blanchisserie, l'air de combustion requis par le brûleur (11) étant préchauffé par le gaz d'échappement de celui-ci, de l'énergie pour le préchauffage d'au moins un liquide étant en outre soutirée du gaz d'échappement du brûleur (11) après la sortie d'un côté de gaz d'échappement (21) de la chaudière à vapeur (10), et tout d'abord l'air de combustion du brûleur (11) et ensuite l'au moins un liquide étant préchauffés par le gaz d'échappement du brûleur (11), **caractérisé en ce que** la température du gaz d'échappement chaud du brûleur (11) est réduite à une température de 90 °C à 140 °C lors du chauffage de l'air de combustion du brûleur (11), et la température du gaz d'échappement du brûleur (11) est encore davantage réduite à une température de 40 °C à 60 °C lors du préchauffage de l'au moins un liquide.

2. Procédé selon la revendication 1, **caractérisé en ce que** la température du gaz d'échappement chaud du brûleur (11) est réduite à une température de 95 °C à 110 °C lors du chauffage de l'air de combustion du brûleur (11), et la température du gaz d'échappement du brûleur (11) est encore davantage réduite à une température de 40 °C à 60 °C, de préférence de 45 °C à 50 °C, lors du préchauffage de l'au moins un liquide.

3. Procédé selon la revendication 1 ou 2, **caractérisé en ce que** l'air de combustion du brûleur (11) est chauffé à une température de 160 °C à 200 °C, de préférence de 170 °C à 190 °C.

4. Procédé selon l'une quelconque des revendications précédentes, **caractérisé en ce que** l'au moins un liquide est chauffé à une température de 60 °C à 90 °C, de préférence de 65 °C à 75 °C, par l'énergie résiduelle dans le gaz d'échappement du brûleur (11).

5. Procédé selon l'une quelconque des revendications précédentes, **caractérisé en ce qu'**un échangeur de chaleur air/liquide est utilisé pour le préchauffage de l'au moins un liquide, notamment un échangeur de chaleur à condensation.

6. Procédé selon l'une quelconque des revendications précédentes, **caractérisé en ce que** de l'eau d'alimentation d'un générateur de vapeur, de préférence d'une chaudière à vapeur (10), est préchauffée par le gaz d'échappement du brûleur (11).

7. Procédé selon la revendication 6, **caractérisé en ce que** l'eau d'alimentation chauffée est introduite dans un dégazeur (12), de préférence un dégazeur thermique (12).

8. Procédé selon l'une quelconque des revendications précédentes, **caractérisé en ce que** le brûleur (11) est exploité avec une régulation d'oxygène résiduel (28).

9. Procédé selon l'une quelconque des revendications 6, 7 ou 8, dans la mesure où cette dernière est dépendante de la revendication 6 ou 7, **caractérisé en ce que** de la vapeur pour l'exploitation d'au moins une machine de blanchisserie, notamment d'une essoreuse à rouleaux, est générée par le générateur de vapeur, notamment la chaudière à vapeur (10).
